# EUROPÄISCHE PATENTSCHRIFT

(11) **EP 4 200 533 B1**
(45) Veröffentlichungstag und Bekanntmachung des Hinweises auf die Patenterteilung: **21.05.2025**
(21) Anmeldenummer: 21769627.7
(22) Anmeldetag: 05.08.2021
(51) Int. Cl.: F16C 17/02, F16C 33/14, F16C 33/04, C23C 8/26, C23C 8/38, C23C 28/04

(54) **GLEITLAGERELEMENT**
SLIDING BEARING ELEMENT
ÉLÉMENT D'UN PALIER LISSE

(30) Priorität: 19.08.2020 AT 602562020
(43) Veröffentlichungstag der Anmeldung: 28.06.2023
(73) Patentinhaber: Rübig Gesellschaft m.b.H. & Co. KG., 4600 Wels (AT)
(72) Erfinder: RÜBIG, Bernd, 4600 Wels (AT)
(74) Vertreter: Burger, Hannes
(86) Internationale Anmeldenummer: PCT/AT2021/060271
(87) Internationale Veröffentlichungsnummer: WO 2022/036379

(56) Entgegenhaltungen:
- DALIBON E L ET AL: "Tribological behavior of DLC films deposited on nitrided and post-oxidized stainless steel by PACVD", JOURNAL OF PHYSICS: CONFERENCE SERIES, INSTITUTE OF PHYSICS PUBLISHING, BRISTOL, GB, vol. 370, no. 1, 19 June 2012 (2012-06-19), pages 12029, XP020224837, ISSN: 1742-6596, DOI: 10.1088/1742-6596/370/1/012029
- BEWILOGUA K ET AL: "Surface technology for automotive engineering", CIRP ANNALS, ELSEVIER BV, NL, CH, FR, vol. 58, no. 2, 1 January 2009 (2009-01-01), pages 608 - 627, XP026770029, ISSN: 0007-8506, [retrieved on 20091012], DOI: 10.1016/J.CIRP.2009.09.001
- VETTER J ED - MONTEMOR FÁTIMA: "60years of DLC coatings: Historical highlights and technical review of cathodic arc processes to synthesize various DLC types, and their evolution for industrial applications", SURFACE AND COATINGS TECHNOLOGY, vol. 257, 25 October 2014 (2014-10-25), pages 213 - 240, XP029080276, ISSN: 0257-8972, DOI: 10.1016/J.SURFCOAT.2014.08.017

## Beschreibung

Die Erfindung betrifft ein Gleitlagerelement umfassend ein Substrat, auf dem eine Funktionsschicht angeordnet ist, wobei die Funktionsschicht eine a-C:H:X DLC-Beschichtung aufweist, wobei X für zumindest ein Element aus der Gruppe Si, O, N, F steht.

Weiter betrifft die Erfindung ein Verfahren zu Herstellung eines Gleitlagerelementes umfassend die Schritte: Bereitstellen eines Substrats und Abscheidung einer Funktionsschicht aus einer a-C:H:X DLC-Beschichtung auf dem Substrat, wobei X für zumindest ein Element aus der Gruppe Si, O, N, F steht.

Es ist bekannt, in Gleitlagern Gleitlagerelemente einzusetzen, die eine DLC-Schicht (DLC = Diamond Like Carbon) aufweisen. Beispielsweise beschreibt die DE 60 305 225 T2 eine Gleitvorrichtung umfassend erste und zweite Gleitelemente, die relativ zueinander an deren Gleitflächen gleiten können, wobei das erste Gleitelement aus einem diamantartigem Kohlenstoffmaterial hergestellt ist, das zweite Gleitelement aus einem Material auf Eisenbasis hergestellt ist; und ein Schmiermittel, welches auf die Gleitflächen des ersten und zweiten Gleitelementes aufgebracht ist

Die DE 10 2005 043 217 A1 beschreibt eine Lagerpaarung mit einem ersten und einem zweiten Lagerkörper, wobei der erste Lagerkörper als Lagersitz einer Kurbelwelle oder als ein in einem kleinen Pleuelauge einer Pleuelstange zu lagernder Kolbenbolzen und der zweite Lagerkörper als Pleuelauge oder Lagerbock eines Motorgehäuses ausgebildet ist, das oder der mit dem ersten Lagerkörper ein Gleitlager bildet, wobei der eine der Lagerkörper eine Oberflächenbeschichtung mit Trockenschmierungseigenschaften aufweist, die eine Basisschicht aus einem Metall, einem Metallcarbid oder einer Metall-Legierung und eine äußere, Trockenschmierungseigenschaften besitzende Deckschicht umfasst, und wobei die der Deckschicht zugewandte Oberfläche des anderen Lagerkörpers porenartige Vertiefungen aufweist, in die durch Abrieb freigesetztes Material der Deckschicht einlagerbar ist. Die Oberflächenbeschichtung ist durch eine mindestens zwei Schichten umfassende DLC-Schicht gebildet, die eine Basisschicht aus einer Wolframcarbidschicht oder einer Chromnitridschicht oder einer Chrom-Basislegierung und eine Deckschicht aus Kohlenstoff aufweist. Dalibon E L et al, "Tribological behavior of DLC films deposited on nitrided and post-oxidized stainless steel by PACVD", Journal of Physics: Conference Series, Institute of Physics Publishing, Bristol, GB, 2012-06-19, Vol. 370, Nr. 1, Seiten 1-6 beschreibt das tribologische Verhalten und die Haftung von durch PACVD auf martensitischem Edelstahl abgeschiedenen DLC-Filmen. Vor der DLC-Abscheidung werden die Proben nitriert und teilweise auch nachoxidiert.

Aufgabe der vorliegenden Erfindung war es, ein Gleitlagerelement mit verbesserter Belastbarkeit bereitzustellen.

Die Aufgabe der Erfindung wird bei dem eingangs genannten Gleitlagerelement dadurch gelöst, dass zwischen dem Substrat und der DLC-Beschichtung eine Verbindungsschicht angeordnet ist, die ein erstes Nitrid eines Elements des Substrats aufweist.

Weiter wird die Aufgabe der Erfindung mit dem eingangs genannten Verfahren gelöst, bei dem vorgesehen ist, dass vor der Abscheidung der Funktionsschicht das Substrat einer Nitrierwärmebehandlung unterzogen wird, um dadurch eine Verbindungsschicht zu erzeugen, die ein erstes Nitrid eines Elements des Substrats aufweist.

Von Vorteil ist dabei, dass das Gleitlagerelement auch in einem Gleitlager bzw. einer Gleitlagerung, die das Gleitlagerelement umfasst, eingesetzt werden kann, die einer sehr hohe Belastungen unterliegt, wie zum Beispiel in einer Windkraftanlage als Rotorlager. Neben dem Vorteil einer geringeren Herz'schen Pressung in der Oberfläche des Gleitlagerelements bei Stillstand, z.B. bei stillstehender Windkraftanlage, wird mit der Erfindung auch der Vorteil erreicht, dass sich durch diesen Aufbau Lebensdauer des Gleitlagerelements erhöht. Die Verbindungsschicht wirkt einer Delamination der Schichten des Gleitlagerelements entgegen. Sie wirkt zudem auch als Stützschicht für die insbesondere unmittelbar darauf angeordnete Funktionsschicht. Dadurch kann dem Nachteil von Gleitlagern entgegengewirkt wird, dass beim Anfahren der Lagerung die Haftreibung überwunden werden muss, um einen hydrodynamischen Film zwischen den Lagerkomponenten aufzubauen. Mit dem Schichtaufbau kann zudem die Haftreibung minimiert werden, insbesondere wenn eine Beschichtung auf Kohlenstoff- und Silizium-Basis eingesetzt wird, die die Lebensdauer der Lagerkomponenten nachhaltig verlängert.

Zur weiteren Verbesserung dieser Effekte kann gemäß einer Ausführungsvariante der Erfindung vorgesehen sein, das erste Nitrid zu zumindest 60 Gew.-% aus Fe₄N (Gamma Nitrid) besteht.

Nach einer anderen Ausführungsvariante der Erfindung kann vorgesehen sein, dass die Verbindungsschicht eine Schichtdicke zwischen 0,5 µm und 25 µm auf-weist. Unterhalb von 0,5 µm ist zwar noch ein die Eigenschaften des Gleitlagerelementes verbessernder Effekt beobachtbar, allerdings nimmt dieser ab einer Schichtdicke von 0,5 µm deutlich zu. Ab einer Schichtdicke von mehr als 25 µm leidet die Wirtschaftlichkeit der Herstellung des Gleitlagerelementes.

Zur weiteren Verbesserung der Verbundfestigkeit des Schichtsystems ist erfindungsgemäß vorgesehen, dass zwischen der Verbindungsschicht und dem Substrat eine Diffusionsschicht angeordnet ist, die eingelagerten Stickstoff und/oder zumindest eine weiteres Nitrid aufweist, das unterschiedlich zum ersten Nitrid ist.

Gemäß einer Ausführungsvariante dazu ist das weitere Nitrid ein Nitrid aus einer Gruppe umfassend Nitride von Aluminium, Nitride von Titan, Nitride von Chrom, Nitride von Vanadium. Diese Metalle werden häufig in Gleitlagerwerkstoffen eingesetzt, sodass mit dem weiteren Nitrid ein Nitrid aus dem Gleitlagerwerkstoff selbst, beispielsweise dem Substrat, gebildet werden kann, womit die Haftfestigkeit der Verbindungsschicht auf dem Substrat verbessert werden kann.

Es kann entsprechend einer weiteren Ausführungsvariante der Erfindung vorgesehen sein, dass die Diffusionsschicht eine Schichtdicke zwischen 0,05 mm und 0,7 mm aufweist, womit das Druckspannungsniveau in der Übergangszone vom Substrat auf die Funktionsschicht positiv beeinflusst werden kann. Dies wiederum wirkt ebenfalls eine Delamination der Schichten entgegen.

Die Funktionsschicht selbst kann gemäß einer anderen Ausführungsvariante der Erfindung eine Schichtdicke zwischen 3 µm und 60 µm aufweisen, womit nicht nur relativ dünne DLC Schichten zum Einsatz kommen können, sondern auch belastbarere Gleitlagerelemente mit relativ dicken DLC Schichten, wobei insbesondere bei den größeren Schichtdicken die verbesserte Haftfestigkeit zur Geltung kommt.

Aus voranstehend erwähnten Gründen kann nach einer anderen Ausführungsvariante der Erfindung kann vorgesehen sein, dass die DLC-Schicht eine a-C:H:Si - DLC-Schicht ist, womit die Haftreibung der Oberfläche der Funktionsschicht reduziert und damit die Standzeit des Gleitlagerelementes verlängert werden kann.

Um die positiven Eigenschaften dieser a-C:H:Si - DLC-Schicht weiter zu verbessern, kann nach einer Ausführungsvariante dazu vorgesehen sein, dass die a-C:H:Si eine Gradientenschicht ist, wobei vorzugsweise gemäß einer weiteren Ausführungsvariante dazu vorgesehen sein kann, dass sich in der Gradientenschicht die Konzentration an Si von einem Anteil zwischen 45 Gew.-% und 55 Gew.-% in einen Anteil zwischen 1 Gew.-% und 11 Gew.-%, die Konzentration an H von einem Anteil zwischen 25 Gew.-% und 35 Gew.-% auf einen Anteil zwischen 0 Gew.-% und 5 Gew.-%, und die Konzentration an C von einem Anteil zwischen 30 Gew.-% und 50 Gew.-%, auf einen Anteil zwischen 85 Gew.-% und 100 Gew.-%, verändert. Die Bestandteile an Si, H und C addieren sich dabei auf 100 Gew.-% Gesamtanteil.

Dabei kann es von Vorteil sein, wenn der Gradient der Gradientenschicht nur in einer Zone mit einer Schichtdicke ausgebildet ist, die zwischen 5 % und 70 % der Schichtdicke der Funktionsschicht beträgt, womit zwar ein in Hinblick auf die Haftfestigkeit der Funktionsschicht auf der Verbindungsschicht verbessertes Interface zur Verbindungsschicht zur Verfügung gestellt werden kann, für die eigentliche Funktion der Funktionsschicht aber auch ein Schichtanteil bereit gestellt werden kann, in dem die Eigenschaften zumindest annährend konstant sind. Von Vorteil ist dabei, dass dieser Eigenschaftsmix in einer einzigen Schicht abgebildet werden kann, wodurch sich positive Effekte in Hinblick auf ein Vereinfachung der Herstellung des Gleitlagerelementes realisieren lassen. Mit geeigneter Prozesssteuerung kann eine derart ausgebildete Funktionsschicht in nur einem Verfahrensschritt abgeschieden werden.

Gemäß einer weiteren Ausführungsvariante der Erfindung kann vorgesehen sein, dass die Oberfläche der Verbindungsschicht einen arithmetischen Mittenrauwert Ra gemäß DIN EN ISO 4287:1998 zwischen 0,05 µm und 0,25 µm aufweist. Hiermit kann nicht nur die Haftfestigkeit der Funktionsschicht auf der Verbindungsschicht verbessert werden, sondern können damit auch in/auf der Funktionsschicht Mikrohohlräumen gebildet werden, in denen während des Betriebes Öl eingelagert werden kann. Diese wiederum kann und in weiterer folgt zu einer Stabilisierung des Ölfilmes führen, wodurch ein Ölfilmabriss verhindert werden kann.

Gemäß den bevorzugten Ausführungsvarianten der Erfindung ist die Funktionsschicht eine Gleitschicht oder eine Einlaufschicht ist.

Nach einer Ausführungsvariante des Verfahrens kann vorgesehen sein, dass die Funktionsschicht und/oder die Verbindungsschicht und/oder die Diffusionsschicht mittels eines PACVD Verfahrens hergestellt wird oder werden, da damit der gesamte Schichtaufbau einer Anlage bzw. einer Anlagenkammer durchgeführt werden kann und somit ein aufwändiges Handhaben der zu beschichtenden Rohlinge während der Herstellung deutlich reduziert werden kann. Zudem kann damit im Zusammenwirken mit zumindest einzelnen Merkmalen des Schichtsystems eine Beschichtung mit relativ geringen Schichthärten (< 1700HV) und hohen Schichtdicken auf dem Substrat abgeschieden werden.

Von Vorteil ist dabei, wenn gemäß weiteren Ausführungsvarianten des Verfahrens die Funktionsschicht bei einer Temperatur zwischen 350 °C und 550 °C hergestellt wird und/oder wenn die Funktionsschicht und/oder die Verbindungsschicht und/oder die Diffusionsschicht mit einer Teilchenstromdichte zwischen Anode und Kathode über die gesamte zu beschichtende Substratoberfläche hergestellt wird oder werden, die während der Abscheidung der Funktionsschicht und/oder der Verbindungsschicht und/oder der Diffusionsschicht um 0 % bis maximal +/- 5 % verändert wird, da diese Maßnahmen zu einer Verbesserung der Schichteigenschaften führen.

Zum besseren Verständnis der Erfindung wird diese anhand der nachfolgenden Figuren näher erläutert.

Es zeigen jeweils in stark vereinfachter, schematischer Darstellung:
- Fig. 1: Einen Ausschnitt aus einem Gleitlagerelement;
- Fig. 2: Eine Vorrichtung zur Beschichtung eines Gleitlagerelementrohlings.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

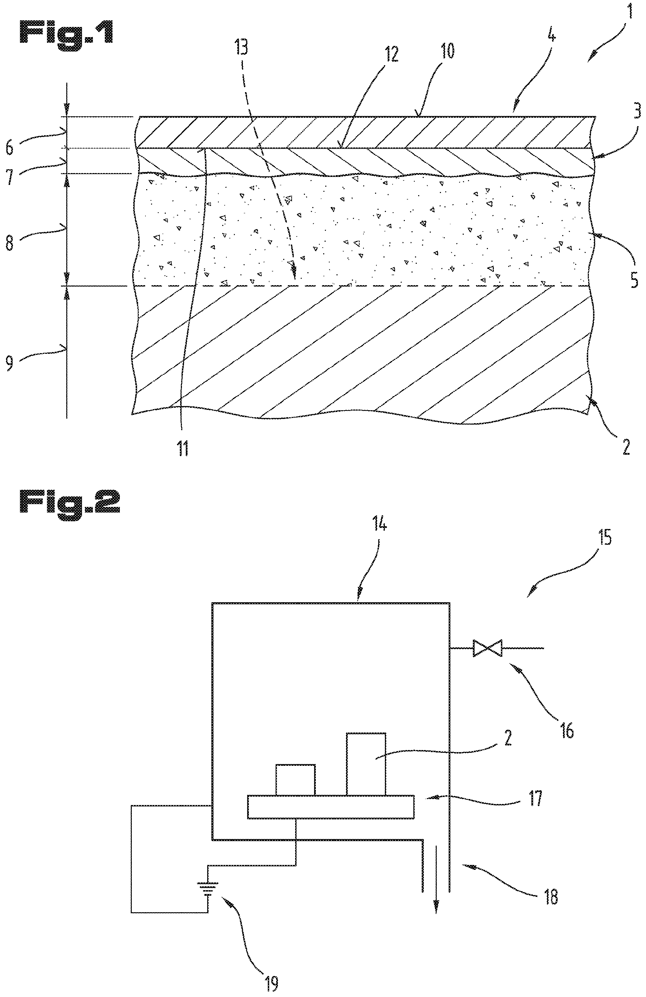

Fig. 1 zeigt einen Ausschnitt aus einem Gleitlagerelement 1 für eine Gleitlagerung.

Das Gleitlagerelement 1 kann beispielsweise ein Anlaufring, eine Halbschale, eine Buchse, ein Segment einer Halbschale oder einer Buchse, etc., sein. Vorzugsweise wird das Gleitlagerelement 1 in einer Gleitlagerung eingesetzt, die einer erhöhter Belastung mit wechselnden Lasten bzw. Stillständen ausgesetzt ist, wie beispielsweise in einer Windkraftanlage. Generell wird das Gleitlagerelement 1 vorzugsweise in einer Gleitlagerung eingesetzt, die einer erhöhten Belastung ausgesetzt ist und die auch bei unzureichender Schmierung oder zu Beginn der Bewegung zweier Reibpartner mit Schmierung auftreten, also unter Bedingung der Mischreibung, betrieben wird.

Sofern das Gleitlagerelement 1 nicht als Buchse ausgeführt ist, weist die Gleitlagerung üblicherweise mehrere (zumindest zwei) Gleitlagerelemente auf. Dabei können mehrere oder alle der Gleitlagerelemente durch ein Gleitlagerelement 1 nach der Erfindung gebildet sein, zumindest ist jedoch eines davon erfindungsgemäß ausgebildet.

In einer nicht beanspruchten Ausführungsvariante weist das Gleitlagerelement 1 ein Substrat 2, eine Verbindungsschicht 3 und eine Funktionsschicht 4 auf bzw. besteht daraus. Die Verbindungsschicht 3 ist unmittelbar auf dem Substrat 1 angeordnet und damit verbunden und die Funktionsschicht 4 ist unmittelbar auf der Verbindungsschicht 3 angeordnet und damit verbunden. Der Begriff "Verbindungsschicht" ist also im Sinne der Erfindung so zu verstehen, dass diese Schicht die Funktionsschicht 4 mit einer weiteren Schicht oder einem weiteren Bauteil des Gleitlagerelementes 1 verbindet, also beispielsweise dem Substrat 2, das sowohl schichtförmig als auch als dazu verschiedenes dreidimensionales Bauteil an sich ausgebildet sein kann.

Bei der in Fig. 1 dargestellten erfindungsgemäßen Ausführungsvariante des Gleitlagerelementes 1 weist dieses noch eine Diffusionsschicht 5 auf. Die Diffusionsschicht 5 ist zwischen der Verbindungsschicht 3 und dem Substrat 2 angeordnet, insbesondere direkt auf dem Substrat 2 und mit der Verbindungsschicht 3 verbunden. In der erfindungsgemäßen Ausführungsvariante besteht das Gleitlagerelement also aus dem Substrat 2, der unmittelbar darauf angeordneten Diffusionsschicht 5, der unmittelbar darauf angeordneten Verbindungsschicht 3 und der unmittelbar darauf angeordneten Funktionsschicht 4.

In der bevorzugten Ausführungsvariante ist die Funktionsschicht 4 eine Gleitschicht oder eine Einlaufschicht. Eine Einlaufschicht ist eine Schicht, die bei der Erstinbetriebnahme des Gleitlagerelementes 1 für dessen Anpassung den Gleitpartner dient. Die Gleitschicht dient hingegen im laufenden Betrieb der Reduktion der Reibung zwischen dem Gleitlagerelement 1 und dem Gleitpartner.

Es ist auch möglich, dass das Gleitlagerelement 1 sowohl eine Gleitschicht als auch eine (unmittelbar) auf der Gleitschicht angeordnete Einlaufschicht aufweist. In diesem Fall können sowohl die Gleitschicht als auch die Einlaufschicht als Funktionsschicht 4 ausgebildet sein, jedoch mit unterschiedlicher Zusammensetzung und/oder mit unterschiedlichen Verfahrensparametern abgeschieden.

Das Gleitlagerelement 1 kann auch noch weitere Schichten aufweisen, wie beispielsweise eine Antifrettingschicht auf der Rückseite des Gleitlagerelementes 1 oder eine weitere reibungsmindernde Schicht auf der Funktionsschicht 4.

Das Substrat 2 besteht aus einer Metallbasislegierung, bei der das Metall der Metallbasis den mengenmäßigen Hauptbestandteil der Legierung bildet. Bevorzugt besteht das Substrat 2 aus einer Eisenbasislegierung, also einer Legierung mit Eisen als Hauptbestandteil, wie beispielsweise Gusseisen, oder insbesondere einem Stahl. Das Substrat 2 kann aber auch aus Aluminium, Nickel, Messing, Titan, etc., bestehen.

Die Diffusionsschicht 5 weist interstitiell eingelagerten Stickstoff und/oder zumindest ein weiteres Nitrid auf, das unterschiedlich zum ersten Nitrid ist. Das weitere Nitrid ist insbesondere ein Nitrid aus einer Gruppe umfassend Nitride von Aluminium, Nitride von Titan, Nitride von Chrom, Nitride von Vanadium.

Der Anteil an eingelagertem Stickstoff an der Diffusionsschicht 5 kann zwischen 0,01 Gew.- und 0,15 Gew.-%, insbesondere zwischen 0,01 Gew.-% und 0,115 Gew.-%, betragen. Der (Gesamt-)Anteil des gegebenenfalls vorhandenen weiteren Nitrids oder der gegebenenfalls vorhandenen weiteren Nitride an der Diffusionsschicht 5 kann zwischen 0,1 Gew.- und 5 Gew.-% betragen. Der Rest auf 100 Gew.-% kann durch die Legierung des Substrats 2 gebildet werden.

Die Verbindungsschicht 3 enthält ein Nitrid eines Elements des Substrats 2. In der bevorzugten Ausführungsvariante ist dies das Gamma Nitrid von Eisen Fe₄N. Alternativ oder zusätzlich dazu kann als erstes Nitrid aber auch Titannitrid (TiN) enthalten sein. Der Anteil an dem ersten Nitrid an der Verbindungsschicht 3 kann zwischen 1 Gew.-% und 55 Gew.-% betragen. Den Rest auf 100 Gew.-% bildet das Element des Substrats 2, aus dem das erste Nitrid gebildet ist oder weitere Elemente aus der Legierung des Substrats 2.

Gemäß einer weiteren Ausführungsvariante des Gleitlagerelementes kann das erste Nitrid zu zumindest 60 Gew.-% aus Fe₄N, insbesondere aus 60 Gew.-% bis 100 Gew.-%, vorzugsweise aus 75 Gew.-% bis 100 Gew.-%, Fe₄N bestehen.

Die Funktionsschicht 4 weist eine a-C:H:X DLC-Beschichtung auf bzw. besteht daraus. X steht für zumindest ein Element aus der Gruppe Si, O, N, F.

In der bevorzugten Ausführungsvariante ist die DLC-Schicht eine a-C:H:Si - DLC-Schicht, also eine mit Silizium dotierte, wasserstoffhältige, amorphe Kohlenstoffschicht.

Der (Gesamt-)Anteil an dem zumindest Element X an der Funktionsschicht 4 kann zwischen 2 Gew.-% und 60 Gew.-%, insbesondere zwischen 4 Gew.-% und 50 Gew.-%, betragen. Der Anteil an Wasserstoff an der Funktionsschicht 4 kann zwischen 0 Gew.-% und 30 Gew.-%, insbesondere zwischen 1 Gew.-% und 25 Gew.-%, betragen. Der Rest auf 100 Gew.-% wird durch C gebildet.

Die Diffusionsschicht 5 und/oder die Verbindungsschicht 3 können als eigene Schichten auf dem Substrat abgeschieden sein. In der bevorzugten Ausführungsvariante des Gleitlagerelementes 1 sind die Diffusionsschicht 5 und/oder die Verbindungsschicht 3 aus dem Werkstoff des Substrats 2, d.h. insbesondere zumindest eines (metallischen) Bestandteils des Substrats 2, wie insbesondere Eisen oder zumindest einem Element aus der Gruppe Aluminium, Titan, Chrom, Vanadium, mit einem weiteren, insbesondere gasförmigen, Reaktionsmittel, wie z.B. einem Stickstoff enthaltendes Reaktionsmittel, beispielsweise einem N₂/H₂ Gemisch, gebildet.

Die Funktionsschicht 4 kann eine Schichtdicke 6 zwischen 3 µm und 60 µm aufweisen. In der Ausführungsvariante der Funktionsschicht 4 als Einlaufschicht kann die Schichtdicke 6 zwischen 3 µm und 10 µm betragen.

Die Verbindungsschicht 3 kann eine Schichtdicke 7 zwischen 0,5 µm und 25 µm, insbesondere zwischen 1 µm und 15 µm, vorzugsweise zwischen 1 µm und 5 µm, aufweisen.

Die Diffusionsschicht 5 kann eine Schichtdicke 8 zwischen 0,05 mm und 0,7 mm, insbesondere zwischen 0,1 mm und 0,5 mm, vorzugsweise zwischen 0,15 mm und 0,3 mm, aufweisen.

Eine Schichtdicke 9 des Substrats 2 richtet sich nach dem jeweiligen Einsatzgebiet des Gleitlagerelementes 1, insbesondere nach dessen Form.

Nach einer anderen Ausführungsvariante kann die Funktionsschicht 4, insbesondere die a-C:H:Si Schicht, eine Gradientenschicht sein. Dabei kann zumindest eines der Elemente der Funktionsschicht 4 in Richtung auf eine Oberfläche 10 oder in Richtung auf die darunter liegendes Verbindungsschicht 3 mit einem zunehmenden oder abnehmenden Konzentrationsgradienten in der Funktionsschicht 4 enthalten sein.

Gemäß einer Ausführungsvariante des Gleitlagerelementes 1 kann dabei vorgesehen sein, dass sich in der Gradientenschicht die Konzentration an Si von einem Anteil zwischen 45 Gew.-% und 55 Gew.-%, insbesondere von einem Anteil von 50 Gew.-%, in einen Anteil zwischen 1 Gew.-% und 11 Gew.-%, insbesondere in einen Anteil von 5 Gew.-%, die Konzentration an H von einem Anteil zwischen 25 Gew.-% und 35 Gew.-%, insbesondere von einem Anteil von 30 Gew.-%, auf einen Anteil zwischen 0 Gew.-% und 5 Gew.-%, insbesondere auf einen Anteil von 0 Gew.-%, und die Konzentration an C von einem Anteil zwischen 30 Gew.-% und 50 Gew.-%, insbesondere von einem Anteil von 40 Gew.-%, auf einen Anteil zwischen 85 Gew.-% und 100 Gew.-%, insbesondere auf einen Anteil von 95 Gew.-%, verändert. Die Bestandteile an Si, H und C addieren sich dabei auf 100 Gew.-% Gesamtanteil.

Der Konzentrationsgradient oder die Konzentrationsgradienten können über die gesamte Schichtdicke 6 der Funktionsschicht 4 ausgebildet sein. Vorzugsweise erstreckt sich der Konzentrationsgradient oder erstrecken sich die Konzentrationsgradienten aber nur über einen Teilbereich der Schichtdicke 6 der Funktionsschicht 4, insbesondere über eine Schichtdicke, die zwischen 5 % und 70 % der Schichtdicke 6 der Funktionsschicht 4 beträgt. Bevorzugt beginnt der oder beginnen die Konzentrationsgradienten an der Oberfläche 10 und/oder einer Oberfläche 11 der Funktionsschicht 4, die an die Verbindungsschicht 3 grenzt.

Gemäß einer weiteren Ausführungsvariante des Gleitlagerelementes 1 kann vorgesehen sein, dass eine Oberfläche 12 der Verbindungsschicht 3, die unmittelbar an der Funktionsschicht 4 anliegt, einen arithmetischen Mittenrauwert Ra gemäß DIN EN ISO 4287:1998 zwischen 0,05 µm und 0,25 µm und/oder eine gemittelte Rautiefe Rz gemäß DIN EN ISO 4287:1984 zwischen 05 µm und 2 µm aufweist. Diese Rauigkeit überträgt sich dabei zumindest annährend auch auf die Oberfläche 10 der Funktionsschicht 4 (also die der gleitenden Belastung unterworfenen Oberfläche 10 der Funktionsschicht 4), womit in der Funktionsschicht 4 "Mikroöltaschen" ausgebildet werden können. In diese kann während des Betriebes Öl eingelagert werden, wodurch eine Stabilisierung des Ölfilmes erreicht und dadurch ein Ölfilmabriss besser verhindert werden kann. Die Aufrauhung der Oberfläche 12 von anfänglich ca. Ra 0,1 µm kann mit der Bildung von Eisen-Nitriden erreicht werden.

Zur Herstellung des Gleitlagerelementes 1 ist vorgesehen, dass ein Substrat 2 bereitgestellt wird und auf diesem dann die einzelnen Schichten abgeschieden bzw. aus diesem erzeugt werden. Dazu kann ein PVD-Verfahren (Physical Vapor Deposition) oder ein CVD-Verfahren (Chemical Vapor Deposition) oder ein APS-Verfahren (Athmospheric Plasma Spray) oder Abwandlungen dieser Verfahren eingesetzt werden.

In der bevorzugten Ausführungsvariante wird/werden die Funktionsschicht 4 und/oder die Verbindungsschicht 3 und/oder die Diffusionsschicht 5 mittels eines PACVD Verfahrens (Plasma-Assisted Chemical Vapour Deposition) hergestellt.

Für die Eigenschaften der Funktionsschicht 4 ist es weiter von Vorteil, wenn diese bei einer Temperatur zwischen 350 °C und 550 °C hergestellt/abgeschieden wird.

Ebenfalls von Vorteil für die Eigenschaften der Funktionsschicht 4 ist es, wenn die Funktionsschicht 4 und/oder die Verbindungsschicht 3 und/oder die Diffusions-schicht 5 mit einer Teilchenstromdichte zwischen einer Anode und einer Kathode der Beschichtungskammer über eine gesamte zu beschichtende Substratoberfläche 13 hergestellt wird oder werden, die während der Abscheidung der Funktionsschicht 4 und/oder der Verbindungsschicht 3 und/oder der Diffusionsschicht 5 um 0 % bis maximal +/- 5 %, insbesondere bis maximal +/- 4 %, verändert wird.

In der bevorzugten Ausführungsvariante des Verfahrens wird die Nitrierung (= Herstellung der Verbindungsschicht 3 und gegebenenfalls der Diffusionsschicht 5) und die Beschichtung (= Herstellung der Funktionsschicht 4) in einem Prozess in einer Vakuumkammer 14 einer Beschichtungsanlage 15, die aus Fig. 2 zu ersehen sind, durchgeführt.

In die Beschichtungsanlage 15 werden über entsprechende Regelventile 16 die für die Nitrierung und die Herstellung der Funktionsschicht 4 erforderlichen Gase wie z.B. Stickstoff, Wasserstoff, Argon, Azethylen, Sauerstoff oder Hexamethyldisiloxan, Methan, Tetrafluormethan, etc., eingeleitet der Volumenstrom richtet sich dabei nach dem jeweiligen Prozesschritt. Ein oder mehrere Substrate 2 wird/werden auf einem Halteelement, beispielsweise einer Chargierplatte 17, plaziert. Das Halteelement ist elektrisch von der Vakuumkammer 14 getrennt. Über eine Vakuumpumpe 18 kann der für die Reaktionen in der Vakuumkammer 14 gewünschte Unterdruck eingestellt werden. Über die das Regelventil 16 und die Vakuumpumpe 18 kann auch eine Reinigung durch einmaliges oder mehrmaliges Spülen der Vakuumkammer 14 nach deren Beschickung mit den Substraten 2 erfolgen. Über eine Stromversorgung 19 wird gepulste Ladung in die Anlage eingebracht und das notwendige Plasma gezündet.

Da der prinzipielle Aufbau und die prinzipielle Arbeitsweise mit derartigen PACVD Beschichtungsanlagen an sich bekannt ist, erübrigen sich weitere Ausführungen dazu. Es sei daher diesbezüglich an den hierfür einschlägigen Stand der Technik verwiesen.

Die Nitierung des Substrats 2 kann beispielsweise unter Anwendung folgender Parameter erfolgen:
- Druck p: 1 mbar bis 5 mbar
- Gasmischung H2 / N2 = 4/1 bis 1/4
- Leistung P = 0,1 kW / m² Oberfläche bis 2 kW / m² Oberfläche
- Spannung U = 400 V bis 700 V

Das Beschichten des nitrierten Substrats 2 zur Herstellung der DLC Schicht kann beispielsweise unter Anwendung folgender Parameter erfolgen:
- Druck p: 1 mbar bis 5 mbar
- Gase:
   H2 0 l/h bis 600 l/h
   C₂H₂5 l/h bis 200 l/h
   Ar 10 l/h bis 300 l/h
   HMDSO 5 g/h bis 300 g/h
- Leistung P = 50 W/m² bis 1000 W/m²
- Spannung U = 300 V bis 600 V
- Beschichtungszeit der Gradientenschicht zwischen 0,1 Stunden und 2,5 Stunden

Die Erfindung betrifft also in der bevorzugten Ausführungsvariante des Verfahrens eine Kombination aus einer Nitrierwärmebehandlung (= Nitrieren mittels Wärmebehandlung), insbesondere Plasmanitrieren, und einer PACVD-Beschichtung, insbesondere einer a-C:H:Si - DLC Beschichtung, für Gleitlagerelemente 1 mit hohen Belastungen. Es kann damit die Haftreibung zwischen dem Gleitlagerelement 1 und einem damit gelagertem Bauteil reduziert werden, wodurch die Lebensdauer der Lagerkomponenten nachhaltig verlängert werden kann. Es können damit u.a. Gleitlagerelemente 1 für Windkraftanlagen hergestellt werden. Neben den voranstehend beschriebenen Effekten kann dem Gleitlagerelemente 1 mit der DLC Schicht eine höhere Verschleißbeständigkeit und/oder Korrosionsbeständigkeit verliehen werden, insbesondere wenn diese auf einer Stahlsubstrat aufgebracht wird. Weiter ist die DLC Schicht wasserabweisend, chemisch inert und elektrisch nichtleitend. Durch die Wasser und Öl abweisenden Eigenschaften kann es bei Gleitreibung zu einem Abriss des Ölfilmes kommen, was zu Beschädigungen der Oberfläche führen kann. Dies spricht an sich gegen den Einsatz eines derartigen Gleitlagerelementes 1 in hoch belasteten Gleitlagerungen. Umso überraschender ist es, dass das Gleitlagerelement 1 nach der Erfindung dennoch bessere Gesamteigenschaften aufweist.

Bekannten DLC Beschichtungen mit höherer Härte weisen in der Regel höhere laterale Druckspannungen im Interface auf. Dies kann zu einer Delamination der Schicht bei höherer Außenbelastung führen. Dieser Nachteil wird mit der Erfindung durch die Kombination der Verbindungsschicht 3 und der Funktionsschicht 4, insbesondere durch die Prozesskombination aus Nitrieren und Beschichten, insbesondere von Stahloberflächen, mit dem Fokus die lateralen Spannungen so gering wie möglich zu halten bei gleichzeitig höheren Verschleißschutzeigenschaften und niedrigen Reibungskoeffizienten beseitigt. Die Schutzwirkung der Beschichtung ist speziell für den Bereich der Mischreibung beim Anfahren oder Stopp des Gleitlagerelementes 1 erzielbar.

Durch die Nitrierung mit voranstehend genanntem Verfahren kann eine vollständige, kompakte und dichte Verbindungsschicht 3 mit einer Porosität von weniger als 25 %, insbesondere weniger als 15 %, erreicht werden.

Die Nitrierung des Substrats vor dem Beschichten sorgt für Druckeigenspannungen in der Substratoberfläche 13. Dadurch weist die Substratoberfläche 13 eine bessere Stützwirkung für die nachfolgende Beschichtung auf. Weiter erhöht die vorliegende Druckeigenspannung die Dauerfestigkeit des Gleitlagerelements 1. Durch die Herstellung der a-C:H:Si Funktionsschciht 4 mit PACVD Technologie weist die DLC Schicht eine relativ geringe Schichthärte (< 1700HV) auf. Zudem kann die Funktionsschicht 4 mit einer relativ hohen Schichtdicke 6 auf dem Substrat 2 abgeschieden werden. Dies kann insbesondere durch das Dotieren mit Silizium und/oder einer geringen Temperatur während der Abscheidung der Funktionsschicht 4 erreicht werden.

Vorzugsweise weist die Funktionsschicht 4 eine dünne (1 µm bis 5 µm) Zwischenschicht mit (hohen) Anteilen an Silizium (zwischen 10 Gew.-% und 500 Gew.-%), Wasserstoff (zwischen 0 Gew.-% und 30 Gew.-%) und Kohlenstoff (zwischen 30 Gew.-% und 85 Gew.-%)auf (die Bestandteile der Zwischenschicht addieren sich zu 100 Gew.-%). Wie voranstehend beschrieben kann die Zwischenschicht eine chemisch gradierte Schicht sein, die anfangs mit höheren Silizium-Gehalte und niedrigeren Kohlenstoffgehalten hergestellt wird. Über die Beschichtungszeit wird der Silizium Anteil verringert und der Kohlenstoffanteil erhöht, bis die Zusammensetzung der darüber liegenden Beschichtung, d.h. der eigentlichen Beschichtung, erreicht wird.

Der Hauptanteil der Beschichtung kann aus Kohlenstoff, Wasserstoff, Sauerstoff und Silizium bestehen und beispielsweise eine Schichtdicke von 3-50 µm Dicke aufweisen.

Vorzugsweise ergeben die Schichtdicke der Zwischenschicht und die Schichtdicke des Hauptanteils der Beschichtung zusammen die Schichtdicke 6 der Funktionsschicht 4.

Wie voranstehend ausgeführt ist es für das Beschichtungsergebnis von Vorteil, wenn an den genannten Komponenten der Beschichtung eine konstante Teilchenstromdichte über die gesamte Bauteiloberfläche von Anode zu Kathode eingestellt wird. Erreicht wird dies durch entsprechende Prozessregelung der Plasmaleistung und Gaszuführung, entsprechende Chargierung, etc.

Die Substrate 2 sind als Kathode geschaltet.

Das maximale Druckspannungsniveau durch die Nitrierung kann einen Wert zwischen 250 MPa und 450 MPa, beispielsweise zwischen 300 MPa und 350 MPa, für den Werkstoff 1.7225, zwischen 250 MPa und 700 MPa, beispielsweise zwischen 300 MPa und 600 MPa, für den Werkstoff 1.8519 und zwischen 500 MPa und 850 MPa, beispielsweise zwischen 550 MPa und 750 MPa, für den Werkstoff 1.8550 aufweisen. Die Eigenspannungsmessung erfolgt mittels Röntgenbeugung laut DIN EN 15305:2009.

Zur Evaluierung der Erfindung wurden unter anderem folgende Ausführungsbeispiele durchgeführt.

### Ausführungsbeispiel 1 (nicht erfindungsgemäß))

- Beschichtung von Hülsen für Anwendung im Maschinenbau aus dem Werkstoff 1.7225

- Parameter
   o Nitrierung
      □ Druck p = 2 mbar
      □ Gasmischung: H₂/N₂ = 150 l/h / 100 l/h
      □ Leistung: P = 300 W/m²
      □ Spannung: U = 480 V
   o DLC-Beschichtung
      □ Druck: 2 mbar
      □ Gase
- H₂ = 320 l/h
- C₂H₂ = 70 l/h
- Ar = 120 l/h
- HMDSO = 50 g/h
- N₂ = 25 l/h
   □ Leistung P = 220 W/m²
   □ Spannung: 390 V
- Ergebnisse
   o Schichtdicke
      □ Zwischenschicht: 2,2 µm
      □ Funktionsschicht: 3,8 µm
   o Schichthärte: 1486 HV
   o Schichthaftung: HF1
   o Nitrierhärtetiefe: NHD = 0,25 mm
   o Verbindungsschichtdicke: 1 µm
   o Kernhärte: 335 HV
   o Reibwert am Tribometer: µ avg = 0,08 (Stift Scheibe Tribometer; trocken; Reibpartner 100Cr6 - unbeschichtet µ = 0,65)

Die DLC-Beschichtung hatte folgenden Zusammensetzung (Angaben in Gew % und gemessen mittels Glimmentladungsspektroskopie GDOES)
Zwischenschicht: 7 % H // 2,5 % O // 35 % Si // Rest C
Funktionsschicht: 5 % H // 2,5 % O // 18 % Si // Rest C

### Ausführungsbeispiel 2 - Beschichtung von Scheiben für Anwendung im Maschinenbau aus dem Werkstoff 1.7225

- Parameter
   o Nitrierung
      □ Druck p = 3 mbar
      □ Gasmischung: H₂/N₂ = 90/90 l/h
      □ Leistung: P = 500 W/m²
      □ Spannung: U = 510 V
   o DLC-Beschichtung
      □ Druck p = 2,7 mbar
      □ Gase
- H₂ = 100 l/h
- C₂H₂ = 45 l/h
- Ar = 45 1/h
- HMDSO = 20 g/h
   □ Leistung P =180 W/m²
   □ Spannung: 400 V
- Ergebnisse
   o Schichtdicke
      □ Diffusionsschicht: 1,5 µm
      □ Funktionsschicht: 6,5 µm
   o Schichthärte: 1250 HV
   o Schichthaftung: HF1
   o Nitrierhärtetiefe: NHD = 0,17 mm
   o Verbindungsschichtdicke: 4 µm
   o Kernhärte: 330 HV
   o Reibwert am Tribometer: µ avg = 0,05 (Stift Scheibe Tribometer; trocken; Reibpartner 100Cr6 - unbeschichtet µ = 0,65)

Die DLC-Beschichtung hatte folgenden Zusammensetzung (Angaben in Gew % und gemessen mittels Glimmentladungsspektroskopie GDOES)
Diffusionsschicht: 4 % H // 1 % N // 2 % O // 40 % Si // Rest C Funktionsschicht: 3 % H // 6 % N // 2 % O // 22 % Si // Rest C

Die Ausführungsbeispiele zeigen oder beschreiben mögliche Ausführungsvarianten des Gleitlagerelementes 1, wobei auch Kombinationen der einzelnen Ausführungsvarianten untereinander möglich sind.

Der Ordnung halber sei abschließend darauf hingewiesen, dass zum besseren Verständnis des Aufbaus des Gleitlagerelementes 1 dieses nicht notwendigerweise maßstäblich dargestellt ist. Im Rahmen der Beschreibung wird unter einer Schicht auch ein Schichtdickenbereich des ursprünglichen Substrats 2 verstanden, der nitriert bzw. generell behandelt worden ist und der damit eine im Vergleich mit dem ursprünglichen Substrat 2 unterschiedliche Zusammensetzung aufweist. Die Schichtdicke 9 des ursprünglichen Substrats 2 vor der Nitrierung bzw. Behandlung ist daher um die Schichtdicke dieser Schicht reduziert. Anstelle von einer Schicht kann daher auch von einer Zone gesprochen werden.

### Bezugszeichenaufstellung

- 1: Gleitlagerelement
- 2: Substrat
- 3: Verbindungsschicht
- 4: Funktionsschicht
- 5: Diffusionsschicht
- 6: Schichtdicke
- 7: Schichtdicke
- 8: Schichtdicke
- 9: Schichtdicke
- 10: Oberfläche
- 11: Oberfläche
- 12: Oberfläche
- 13: Substratoberfläche
- 14: Vakuumkammer
- 15: Beschichtungsanlage
- 16: Regelventil
- 17: Chargierplatte
- 18: Vakuumpumpe
- 19: Stromversorgung

## Patentansprüche

1. Gleitlagerelement (1) umfassend ein Substrat (2), eine unmittelbar darauf angeordnete Diffusionsschicht (5) und eine Funktionsschicht (4), wobei die Funktionsschicht (4) eine a-C:H:X DLC-Beschichtung aufweist, wobei X für zumindest ein Element aus der Gruppe Si, O, N, F steht, und die Diffusionsschicht (5) eingelagerten Stickstoff und/oder zumindest ein Nitrid aufweist, das unterschiedlich zu einem ersten Nitrid ist, wobei das erste Nitrid ein Nitrid eines Elements des Substrats (2) ist, **dadurch gekennzeichnet, dass** zwischen der Diffusionsschicht (5) und der DLC-Beschichtung eine Verbindungsschicht (3) angeordnet ist, die das erstes Nitrid des Elements des Substrats (2) aufweist, wobei die Verbindungsschicht (3) unmittelbar auf der Diffusionsschicht (5) und die Funktionsschicht (4) unmittelbar auf der Verbindungsschicht angeordnet sind.

2. Gleitlagerelement (1) nach Anspruch 1, **dadurch gekennzeichnet, dass** das erste Nitrid zu zumindest 60 Gew.-% aus Fe₄N (Gamma Nitrid) besteht.

3. Gleitlagerelement (1) nach Anspruch 1 oder 2, **dadurch gekennzeichnet, dass** die Verbindungsschicht (3) eine Schichtdicke (7) zwischen 0,5 µm und 25 µm aufweist.

4. Gleitlagerelement (1) nach einem der Ansprüche 1 bis 3, **dadurch gekennzeichnet, dass** das weitere Nitrid ein Nitrid aus einer Gruppe umfassend Nitride von Aluminium, Nitride von Titan, Nitride von Chrom, Nitride von Vanadium.

5. Gleitlagerelement (1) nach einem der Ansprüche 1 bis 4, **dadurch gekennzeichnet, dass** die Diffusionsschicht (5) eine Schichtdicke (8) zwischen 0,05 mm und 0,7 mm aufweist.

6. Gleitlagerelement (1) nach einem der Ansprüche 1 bis 5, **dadurch gekennzeichnet, dass** die Funktionsschicht (4) eine Schichtdicke (6) zwischen 3 µm und 60 µm aufweist.

7. Gleitlagerelement (1) nach einem der Ansprüche 1 bis 6, **dadurch gekennzeichnet, dass** die DLC-Schicht eine a-C:H:Si - DLC-Schicht ist.

8. Gleitlagerelement (1) nach Anspruch 7, dass die a-C:H:Si - DLC Schicht eine Gradientenschicht ist.

9. Gleitlagerelement (1) nach Anspruch 8, **dadurch gekennzeichnet, dass** sich die in der Gradientenschicht die Konzentration an Si von einem Anteil zwischen 45 Gew.-% und 55 Gew.-% in einen Anteil zwischen 1 Gew.-% und 11 Gew.-%, die Konzentration an H von einem Anteil zwischen 25 Gew.-% und 35 Gew.-% auf einen Anteil zwischen 0 Gew.-% und 5 Gew.-%, und die Konzentration an C von einem Anteil zwischen 30 Gew.-% und 50 Gew.-% auf einen Anteil zwischen 85 Gew.-% und 100 Gew.-% verändert.

10. Gleitlagerelement (1) nach Anspruch 8 oder 9, **dadurch gekennzeichnet, dass** der Gradient der Gradientenschicht in einer Zone mit einer Schichtdicke ausgebildet ist, die zwischen 5 % und 70 % der Schichtdicke (6) der Funktionsschicht (4) beträgt.

11. Gleitlagerelement (1) nach einem der Ansprüche 1 bis 10, **dadurch gekennzeichnet, dass** die Oberfläche (12) der Verbindungsschicht (3) einen arithmetischen Mittenrauwert Ra gemäß DIN EN ISO 4287:1998 zwischen 0,05 µm und 0,25 µm aufweist.

12. Gleitlagerelement (1) nach einem der Ansprüche 1 bis 11, **dadurch gekennzeichnet, dass** die Funktionsschicht (4) eine Gleitschicht oder eine Einlaufschicht ist.

13. Verfahren zu Herstellung eines Gleitlagerelementes (1), nach einem der Ansprüche 1 bis 12, umfassend die Schritte: Bereitstellen eines Substrats (2), Bildung einer Diffusionsschicht (5) auf dem Substrat (2) durch eine Nitrierwärmebehandlung, in der Stickstoff eingelagert wird und/oder zumindest eine weiteres Nitrid gebildet wird, das unterschiedlich zu einem ersten Nitrid ist, das ein Nitrid eines Elements des Substrats (2) ist, und Abscheidung einer Funktionsschicht (4) aus einer a-C:H:X DLC-Beschichtung, wobei X für zumindest ein Element aus der Gruppe Si, O, N, F steht, **dadurch gekennzeichnet, dass** während der Nitrierwärmebehandlung nach der Bildung der Diffusionsschicht (5) und vor der Abscheidung der Funktionsschicht (4) mit der Nitrierwärmebehandlung eine Verbindungsschicht (3) erzeugt wird, die das erstes Nitrid des Elements des Substrats (2) aufweist.

14. Verfahren nach Anspruch 13, **dadurch gekennzeichnet, dass** die Funktionsschicht (4) und/oder die Verbindungsschicht (3) und/oder die Diffusionsschicht (5) mittels eines PACVD Verfahrens hergestellt wird oder werden.

15. Verfahren nach Anspruch 13 oder 14, **dadurch gekennzeichnet, dass** die Funktionsschicht (4) bei einer Temperatur zwischen 350 °C und 550 °C hergestellt wird.

16. Verfahren nach Anspruch 14 oder 15, **dadurch gekennzeichnet, dass** die Funktionsschicht (4) und/oder die Verbindungsschicht (3) und/oder die Diffusionsschicht (5) mit einer Teilchenstromdichte zwischen Anode und Kathode über die gesamte zu beschichtende Substratoberfläche (13) hergestellt wird oder werden, die während der Abscheidung der Funktionsschicht (4) und/oder der Verbindungsschicht (4) und/oder der Diffusionsschicht (5) um 0 % bis maximal +/- 5 % verändert wird.

## Claims

1. A sliding bearing element (1) comprising a substrate (2), a diffusion layer (5) arranged directly thereon and a functional layer (4), wherein the functional layer (4) has an a-C:H:X DLC coating, wherein X stands for at least one element from the group of Si, O, N, F, and the diffusion layer (5) has embedded nitrogen and/or at least one nitride which is different from a first nitride, wherein the first nitride is a nitride of an element of the substrate (2), **characterized in that** a compound layer (3) comprising the first nitride of the element of the substrate (2) is arranged between the diffusion layer (5) and the DLC coating, wherein the compound layer (3) is arranged directly on the diffusion layer (5) and the functional layer (4) is arranged directly on the compound layer.

2. The sliding bearing element (1) according to claim 1, **characterized in that** at least 60 wt.% of the first nitride consists of Fe₄N (gamma nitride).

3. The sliding bearing element (1) according to claim 1 or 2, **characterized in that** the compound layer (3) has a layer thickness (7) of between 0.5 µm and 25 µm.

4. The sliding bearing element (1) according to one of claims 1 to 3, **characterized in that** the further nitride is a nitride from a group comprising nitrides of aluminum, nitrides of titanium, nitrides of chromium, nitrides of vanadium.

5. The sliding bearing element (1) according to one of claims 1 to 4, **characterized in that** the diffusion layer (5) has a layer thickness (8) of between 0.05 mm and 0.7 mm.

6. The sliding bearing element (1) according to one of claims 1 to 5, **characterized in that** the functional layer (4) has a layer thickness (6) of between 3 µm and 60 µm.

7. The sliding bearing element (1) according to one of claims 1 to 6, **characterized in that** the DLC layer is an a-C:H:Si DLC layer.

8. The sliding bearing element (1) according to claim 7, **characterized in that** the a-C:H:Si DLC layer is a gradient layer.

9. The sliding bearing element (1) according to claim 8, **characterized in that** the concentration of Si in the gradient layer changes from a proportion of between 45 wt.% and 55 wt.% to a proportion of between 1 wt.% and 11 wt.%, the concentration of H changes from a proportion of between 25 wt.% and 35 wt.% to a proportion of between 0 wt.% and 5 wt.%, and the concentration of C changes from a proportion of between 30 wt.% and 50 wt.% to a proportion of between 85 wt.% and 100 wt.%.

10. The sliding bearing element (1) according to claim 8 or 9, **characterized in that** the gradient of the gradient layer is formed in a zone with a layer thickness which is between 5% and 70% of the layer thickness (6) of the functional layer (4).

11. The sliding bearing element (1) according to one of claims 1 to 10, **characterized in that** the surface (12) of the compound layer (3) has an arithmetic mean roughness value Ra according to DIN EN ISO 4287:1998 of between 0.05 µm and 0.25 µm.

12. The sliding bearing element (1) according to one of claims 1 to 11, **characterized in that** the functional layer (4) is a sliding layer or a running-in layer.

13. A method for producing a sliding bearing element (1) according to one of claims 1 to 12, comprising the steps of: providing a substrate (2), forming a diffusion layer (5) on the substrate (2) by a nitriding heat treatment in which nitrogen is embedded and/or at least one further nitride is formed which is different from a first nitride which is a nitride of an element of the substrate (2), and depositing a functional layer (4) of an a-C:H:X DLC coating, wherein X stands for at least one element from the group of Si, O, N, F, **characterized in that** during the nitriding heat treatment, after the formation of the diffusion layer (5) and before the deposition of the functional layer (4), a compound layer (3) is produced by the nitriding heat treatment which compound layer (3) comprises the first nitride of the element of the substrate (2).

14. The method according to claim 13, **characterized in that** the functional layer (4) and/or the compound layer (3) and/or the diffusion layer (5) is or are produced by means of a PACVD process.

15. The method according to claim 13 or 14, **characterized in that** the functional layer (4) is produced at a temperature of between 350 °C and 550 °C.

16. The method according to claim 14 or 15, **characterized in that** the functional layer (4) and/or the compound layer (3) and/or the diffusion layer (5) is or are produced with a particle current density between anode and cathode over the entire substrate surface (13) to be coated, which is changed by 0 % to a maximum of +/- 5 % during the deposition of the functional layer (4) and/or the compound layer (4) and/or the diffusion layer (5).

## Revendications

1. Élément de palier lisse (1) comprenant un substrat (2), une couche de diffusion (5) disposée directement sur celui-ci et une couche fonctionnelle (4), dans lequel la couche fonctionnelle (4) présente un revêtement DLC a-C:H:X, dans lequel X représente au moins un élément du groupe Si, O, N, F et la couche de diffusion (5) comprend de l'azote déposé et/ou au moins un nitrure qui est différent d'un premier nitrure, dans lequel le premier nitrure est un nitrure d'un élément du substrat (2), **caractérisé en ce que**, entre la couche de diffusion (5) et le revêtement DLC, est disposée une couche de liaison (3) qui comprend le premier nitrure de l'élément du substrat (2), dans lequel la couche de liaison (3) est disposée directement sur la couche de diffusion (5) et la couche fonctionnelle (4) est disposée directement sur la couche de liaison.

2. Élément de palier lisse (1) selon la revendication 1, **caractérisé en ce que** le premier nitrure est constitué d'au moins 60 % en poids de Fe₄N (nitrure gamma).

3. Élément de palier lisse (1) selon la revendication 1 ou 2, **caractérisé en ce que** la couche de liaison (3) présente une épaisseur de couche (7) entre 0,5 µm et 25 µm.

4. Élément de palier lisse (1) selon l'une des revendications 1 à 3, **caractérisé en ce que** l'autre nitrure est un nitrure d'un groupe comprenant des nitrures d'aluminium, des nitrures de titane, des nitrures de chrome, des nitrures de vanadium.

5. Élément de palier lisse (1) selon l'une des revendications 1 à 4, **caractérisé en ce que** la couche de diffusion (5) présente une épaisseur de couche (8) entre 0,05 mm et 0,7 mm.

6. Élément de palier lisse (1) selon l'une des revendications 1 à 5, **caractérisé en ce que** la couche fonctionnelle (4) présente une épaisseur de couche (6) entre 3 µm et 60 µm.

7. Élément de palier lisse (1) selon l'une des revendications 1 à 6, **caractérisé en ce que** la couche DLC est une couche DLC a-C:H:Si.

8. Élément de palier lisse (1) selon la revendication 7, **caractérisé en ce que** la couche DLC a-C:H:Si est une couche à gradient.

9. Élément de palier lisse (1) selon la revendication 8, **caractérisé en ce que** la concentration en Si dans la couche à gradient varie d'une part entre 45 % en poids et 55 % en poids à une part entre 1 % en poids et 11 % en poids, la concentration de H varie d'une part entre 25 % en poids et 35 % en poids à une part entre 0 % en poids et 5 % en poids et la concentration en C varie d'une part entre 30 % en poids et 50 % en poids à une part entre 85 % en poids et 100 % en poids.

10. Élément de palier lisse (1) selon la revendication 8 ou 9, **caractérisé en ce que** le gradient de la couche à gradient est réalisé dans une zone avec une épaisseur de couche qui représente entre 5 % et 70 % de l'épaisseur de couche (6) de la couche fonctionnelle (4).

11. Élément de palier lisse (1) selon l'une des revendications 1 à 10, **caractérisé en ce que** la surface (12) de la couche de liaison (3) présente une valeur de rugosité moyenne arithmétique selon DIN EN ISO 4287:1998 entre 0,05 µm et 0,25 µm.

12. Élément de palier lisse (1) selon l'une des revendications 1 à 11, **caractérisé en ce que** la couche fonctionnelle (4) est une couche de glissement ou une couche de rodage.

13. Procédé de fabrication d'un élément de palier lisse (1) selon l'une des revendications 1 à 12, comprenant les étapes suivantes : mise à disposition d'un substrat (2), formation d'une couche de diffusion (5) sur le substrat (2) à l'aide d'un traitement thermique de nitration, dans laquelle est déposé de l'azote et/ou est formé au moins un autre nitrure, qui est différent d'un premier nitrure, qui est un nitrure d'un élément du substrat (2) et le dépôt d'une couche fonctionnelle (4) constituée d'un revêtement DLC a-C:H:X, dans lequel X représente au moins un élément du groupe Si, O, N, F, **caractérisé en ce que**, pendant le traitement de nitration, après la formation de la couche de diffusion (5) avant le dépôt de la couche fonctionnelle (4) avec le traitement thermique de nitration, une couche de liaison (3) est générée, qui comprend le premier nitrure de l'élément du substrat (2).

14. Procédé selon la revendication 13, **caractérisé en ce que** la couche fonctionnelle (4) et/ou la couche de liaison (3) et/ou la couche de diffusion (5) sont réalisées au moyen d'un procédé PACVD.

15. Procédé selon la revendication 13 ou 14, **caractérisé en ce que** la couche fonctionnelle (4) est réalisée à une température entre 350 °C et 550 °C.

16. Procédé selon la revendication 14 ou 15, **caractérisé en ce que** la couche fonctionnelle (4) et/ou la couche de liaison (3) et/ou la couche de diffusion (5) sont réalisées avec une densité de flux de particules entre anode et cathode sur toute la surface de substrat (13) à revêtir, qui varie, pendant le dépôt de la couche fonctionnelle (4) et/ou de la couche de liaison (4) et/ou de la couche de diffusion (5), de 0 % à ± 5 % maximum.
